**Europäisches Patentamt**

**European Patent Office**

**Office européen des brevets**

(19)

(11) Numéro de publication: **0 113 850
B1**

(12)

# FASCICULE DE BREVET EUROPEEN

(45) Date de publication du fascicule du brevet:
22.04.87

(51) Int. Cl.⁴: **H 01 M 4/62, H 01 M 4/34**

(21) Numéro de dépôt: **83112259.3**

(22) Date de dépôt: **06.12.83**

(54) Electrodes pour générateur électrochimique à base d'oxyde d'argent bivalent.

(30) Priorité: **10.12.82 FR 8220703**

(43) Date de publication de la demande:
**25.07.84 Bulletin 84/30**

(45) Mention de la délivrance du brevet:
**22.04.87 Bulletin 87/17**

(84) Etats contractants désignés:
**DE FR GB**

(56) Documents cités:
**FR - A - 362 692
FR - A - 1 365 694
FR - A - 2 010 079
FR - A - 2 389 242
US - A - 3 573 122**

**CHEMICAL ABSTRACTS, vol. 90, no. 26, 25 juin 1979,
page 552, no. 212295h, Columbus, Ohio, USA
PATENTS ABSTRACTS OF JAPAN, vol. 5, no.
205(E-88)(877), 25 décembre 1981**

*Le dossier contient des informations techniques
présentées postérieurement au dépôt de la demande et
ne figurant pas dans le présent fascicule.*

(73) Titulaire: **Société Anonyme dite SAFT, 156, avenue de
Metz, F-93230 Romainville (FR)**

(72) Inventeur: **Rousseau, Pierre, 4, rue Saint Fargeau,
F-75020 Paris (FR)**
Inventeur: **Duperray, Gérard, 2, rue Pasteur la Norville,
F-91290 Arpajon (FR)**
Inventeur: **Hilaire, Michel, 35 Résidence Courdimanche,
F-91940 Les Ulis (FR)**

(74) Mandataire: **Weinmiller, Jürgen et al,
Lennéstrasse 9 Postfach 24, D-8133 Feldafing (DE)**

## Description

La présente invention concerne une électrode pour générateur électrochimique comportant une matière active à base de poudre d'oxyde d'argent bivalent AgO selon le préambule de la revendication 1. Une telle électrode est connue, par exemple à partir du document FR-A 2 010 079. Comme conducteur électronique, on utilise dans cet art antérieur de la poudre d'argent métallique et/ou des copeaux d'argent.

Les électrodes habituellement mises en œuvre dans les piles à l'argent sont formées à partir de poudre d'argent frittée et oxydée, l'ensemble étant maintenu sur un collecteur de courant en argent déployé.

Pour respecter l'encombrement et la masse des piles utilisées à haut régime de décharge, c'est-à-dire délivrant des densités de courant comprises entre 25 et 100 A/dm², il est nécessaire de réaliser un empilage de VOLTA à l'aide d'électrodes de grandes dimensions, par exemple de l'ordre de quelques décimètres carrés. Or des électrodes à base de poudre d'argent frittée oxydée présentent pour ces dimensions une grande fragilité (risques de fissures notamment).

La présente invention a pour but de réaliser une électrode de grande dimension, à base de poudre d'oxyde d'argent bivalent, présentant des caractéristiques électriques équivalentes à celle d'une électrode d'argent fritté oxydé, mais ayant une meilleure tenue mécanique.

Elle a en outre pour but d'améliorer les performances d'une électrode telle qu'elle est connue par le document cité. Ce but est atteint par l'électrode telle qu'elle est définie par la revendication 1. Des perfectionnements de cette électrode sont définis par les sousrevendications.

Les pourcentages en pellicules conductrices sont tels que, pour des valeurs inférieures, la conductibilité électronique est insuffisante et que, pour des valeurs supérieures, la capacité de l'électrode est inutilement diminuée.

On a découvert que, d'une manière surprenante, une poudre de grains sphériques d'argent ne permettait pas d'obtenir un résultat satisfaisant tandis qu'une poudre pelliculaire le permettait.

L'invention sera décrite ci-après plus en détail à l'aide d'un mode de réalisation donné à titre illustratif, mais nullement limitatif.

On a réalisé un mélange à partir des constituants suivants (pourcentages donnés en poids):

PTFE : 1,5% (Fibres de polypropylène: 0,2%).
Pellicules d'argent: 5%.
Le reste en poudre d'argent AgO.

Rappelons que les pellicules d'argent sont seniblement des disques ayant une épaisseur de l'ordre de 0,1 μm et un diamètre de l'ordre de 20 μm. Leur surface spécifique est de 0,5 à 1,5 m²/g.

On commence par réaliser le mélange d'oxyde d'argent et de pellicules d'argent; puis on ajoute les fibres mises en suspension dans l'eau. On ajoute ensuite le P.T.F.E. et on homogénéise l'ensemble de manière à avoir une pâte fibrillée. Puis on réalise, de manière connue en soi, la plastification de l'électrode par laminage, pliage, puis compression de la pâte. On découpe ensuite une électrode aux dimensions voulues qui présente les caractéristiques mécaniques souhaitées.

Bien entendu, les pourcentages qui viennent d'être donnés peuvent être modifiés, dans les limites indiquées plus haut.

L'argent pelliculaire qui constitue le mode de réalisation préférentiel peut être toutefois remplacé par les pellicules de graphite, définies plus haut.

## Revendications

1. Electrode pour générateur électrochimique comportant une matière active à base de poudre d'oxyde d'argent bivalent AgO, un conducteur électronique en mélange intime avec ladite poudre et un liant qui sert à plastifier l'ensemble, caractérisée par le fait que ledit conducteur électronique est sous forme de pellicules d'un corps choisi parmi l'argent et le graphite, ayant seniblement la forme de disques présentant un rapport diamètre/épaisseur supérieur à 40.

2. Electrode selon la revendication 1, caractérisée par le fait que les pellicules d'argent ont sensiblement la forme de disques dont le diamètre est compris entre 20 μm et 50 μm et dont l'épaisseur est comprise entre 0,1 μm et 0,5 μm.

3. Electrode selon la revendication 2, caractérisée par le fait que la surface spécifique desdites pellicules d'argent est comprise entre 0,5 et 1,5 m²/g.

4. Electrode selon la revendication 1, caractérisée par le fait que les particules de graphite ont sensiblement la forme de disques dont le diamètre est compris entre 2 μm et 5 μm et dont l'épaisseur est comprise entre 0,01 μm et 0,03 μm.

5. Electrode selon la revendication 4, caractérisée par le fait que lesdites particules de graphite ont une surface spécifique comprise entre 10 et 15 m²/g.

6. Electode selon l'une des revendications précédentes, caractérisée par le fait qu'elle présente la composition suivante en poids:

- Poudre d'oxyde d'argent: de 80 à 97%
- Pellicules conductrices: de 2 à 20%
- Liant: de 1 à 3% (dont 0,1% à 0,5% de fibres).

## Patentansprüche

1. Elektrode für einen elektrochemischen Generator mit einem aktiven Material auf der Basis von zweiwertigem Silberoxidpulver AgO, einem Elektronenleiter gut gemischt mit dem genannten Pulver und mit einem Bindemittel, das dazu dient, das Ganze zu plastizieren, dadurch gekennzeichnet, dass der Elektronenleiter in Form von Folien eines Stoffes vorliegt, der ausgewählt wird aus Silber und Graphit, wobei die Folien im wesentlichen die Form von Scheiben mit einem Durchmesser/Dicke-Verhältnis grösser als 40 haben.

2. Elektrode nach Anspruch 1, dadurch gekennzeichnet, dass die Silberfolien im wesentlichen die Form von Scheiben haben, deren Durchmesser zwischen 20 μm und 50 μm liegt und deren Dicke zwischen 0,1 μm und 0,5 μm liegt.

3. Elektrode nach Anspruch 2, dadurch gekennzeichnet, dass die spezifische Oberfläche dieser Silberfolien zwischen 0,5 und 1,5 m²/g liegt.

4. Elektrode nach Anspruch 1, dadurch gekennzeichnet, dass die Graphitteilchen im wesentlichen die Form von Scheiben haben, deren Durchmesser zwischen 2 μm und 5 μm und deren Dicke zwischen 0,01 μm und 0,03 μm liegt.

5. Elektrode nach Anspruch 4, dadurch gekennzeichnet, dass die Graphitteilchen eine spezifische Oberfläche haben, die zwischen 10 und 15 m²/g liegt.

6. Elektrode nach einem der vorhergehenden Ansprüche, dadurch gekennzeichnet, dass sie die folgende Zusammensetzung in Gew.-% aufweist:

- Silberoxidpulver: von 80 bis 97%
- leitende Folien: von 2 bis 20%
- Bindemittel: von 1 bis 3% (davon 0,1% bis 0,5% Fasern).

**Claims**

1. An electrode for an electrochemical generator, comprising an active material on the basis of a bivalent silver oxide powder AgO, an electronic conductor in an intimate mixture with said powder and a binder which serves to plastify the unit, characterized in that said electronic conductor is present in the form of films of a body chosen amongst silver and graphite, having essentially the form of a disk presenting a diameter/thickness ratio higher than 40.

2. An electrode according to claim 1, characterized in that the silver films are substantially disk-shaped, the diameter of the disks being comprised between 20 μm and 50 μm and the thickness being comprised between 0.1 μm and 0.5 μm.

3. An electrode according to claim 2, characterized in that the specific surface of said silver films is comprised between 0.5 and 1.5 m²/g.

4. An electrode according to claim 1, characterized in that the graphite particles are substantially disk-shaped, the diameter of the disks being comprised between 2 μm and 5 μm and the thickness being comprised between 0.01 μm and 0.03 μm.

5. An electrode according to claim 4, characterized in that said graphite particles have a specific surface comprised between 10 and 15 m²/g.

6. An electrode according to any one of the preceding claims, characterized in that it presents the following composition in weight:

- Silver oxide powder: from 80 to 97%
- conductive films: from 2 to 20%
- binder: from 1 to 3% (of which 0.1% to 0.5% are fibres).